Europäisches Patentamt

European Patent Office

Office européen des brevets

(11) Numéro de publication : **0 345 126 B1**

(12) **FASCICULE DE BREVET EUROPEEN**

(45) Date de publication du fascicule du brevet :
**22.04.92 Bulletin 92/17**

(51) Int. Cl.⁵ : **B29C 65/00**, F16L 53/00

(21) Numéro de dépôt : **89401436.4**

(22) Date de dépôt : **25.05.89**

(54) **Dispositif de refroidissement ou de réchauffage de conduites destinées à transporter par exemple du gaz.**

(30) Priorité : **31.05.88 FR 8807245**

(43) Date de publication de la demande :
**06.12.89 Bulletin 89/49**

(45) Mention de la délivrance du brevet :
**22.04.92 Bulletin 92/17**

(84) Etats contractants désignés :
**AT BE CH DE ES GB GR IT LI LU NL SE**

(56) Documents cités :
**DE-U- 8 633 676
FR-A- 2 169 020
GB-A- 2 187 815**

(73) Titulaire : **GAZ DE FRANCE
23, rue Philibert Delorme
F-75017 Paris (FR)**
Titulaire : **"SENS CONSTRUCTIONS"
(SENSCO)
11, rue de Gravereau
F-89100 Sens (FR)**

(72) Inventeur : **Ladovic, Gelko
10 rue des Bouvreuils
F-77410 Claye-Souilly (FR)**
Inventeur : **Longeau, Jean-Michel
Hameau de Beaujard
F-89500 Villeneuve sur Yonne (FR)**

(74) Mandataire : **Durand, Yves Armand Louis et al
CABINET WEINSTEIN 20, Avenue de
Friedland
F-75008 Paris (FR)**

## Description

La présente invention a essentiellement pour objet un dispositif de refroidissement ou de réchauffage de conduites destinées à transporter un fluide quelconque et tel que par exemple du gaz.

Il est déjà connu de raccorder deux conduites en matière plastique à l'aide d'un manchon ou analogue électrosoudable réalisant la jonction des deux conduites.

Durant l'opération de raccordement, les deux conduites à raccorder sont bien entendu maintenues par des moyens de support spéciaux et appropriés.

Des problèmes se posent lorsqu'on effectue le raccordement de conduites selon le processus ci-dessus.

Le premier problème est celui de l'accélération du refroidissement après électrosoudage, de façon à pouvoir libérer rapidement les dispositifs de supportage et de maintien des conduites, ce qui permettrait de raccourcir le temps d'immobilisation du matériel et donc de diminuer le coût global de l'opération.

Il y a aussi un deuxième problème qui est celui du raccordement des conduites par temps froid. Dans ce cas, il est utile de réchauffer l'appareillage de raccordement des conduites et les conduites elles-mêmes pour les rendre en quelque sorte plus malléables et prêtes à l'électrosoudage. En d'autres termes, un tel préchauffage ne peut être de nature qu'à faciliter et accélérer l'opération de raccordement, puisque l'appareillage se trouvera dans une plage de température permettant d'effectuer le travail pratiquement immédiatement.

On connaît d'après le document GB-A-2 187 815 un dispositif de refroidissement de conduites comme décrit dans le préambule des revendications 1, 2 et 4.

Toutefois, un tel dispositif ne constitue pas un dispositif de refroidissement ou de réchauffage particulièrement simple, fiable, peu coûteux et qui peut être mis en oeuvre très rapidement et très commodément sur un chantier.

Aussi, la présente invention a pour but de parvenir aux buts ci-dessus.

A cet effet, l'invention a pour objet un dispositif de refroidissement ou de réchauffage de conduites destinées à transporter un fluide quelconque tel que du gaz, comprenant une enveloppe amovible à laquelle est associé un moyen de refroidissement ou de réchauffage, caractérisé en ce que l'enveloppe, susceptible d'entourer une zone de raccordement avec manchon des conduites, comporte deux poches contenant respectivement de l'eau et un produit qui, mélangé avec l'eau, produit une réaction exothermique ou endothermique, ces deux poches étant agencées entre une enveloppe extérieure thermiquement isolante et une enveloppe intérieure de cellulose retenant le mélange des produits dans les deux poches après perçage de celles-ci.

Ainsi, comme on le comprend, l'enroulement de l'enveloppe, qui pourra être perdue ou réutilisable, autour de la zone de raccordement de deux conduites ou autour de l'extrémité de l'une des conduites, sera suffisant pour assurer efficacement à l'aide d'un agent approprié le refroidissement ou le réchauffage de la zone enveloppée.

Suivant une variante, l'invention a pour objet un dispositif de refroidissement ou de réchauffage de conduites dstinées à transporter un fluide quelconque tel que du gaz, comprenant une enveloppe amovible à laquelle est associé un moyen de refroidissement ou de réchauffage, caractérisé en ce que l'enveloppe, susceptible d'entourer une zone de raccordement avec manchon des conduites, est réalisée en un matériau thermiquement isolant et comporte sur l'une de ses faces au moins une poche ouverte pouvant recevoir, de façon amovible un produit refroidissant ou de réchauffage conditionné et contenu dans une autre poche.

Suivant une autre caractéristique de l'invention, l'enveloppe précitée est munie sur ses deux côtés opposés et sur ses deux faces, de bandes d'auto-accrochage, ou bien des pattes d'accrochage sont prévues sur deux bords opposés de l'enveloppe, ou encore des masses sont prévues sur ces deux bords opposés.

Ainsi, l'enveloppe mise en place autour de la zone de raccordement des conduites sera fermement maintenue dans sa position enroulée ou montée autour de la zone à refroidir ou réchauffer.

Suivant une autre variante, l'invention a pour objet un dispositif de refroidissement ou de réchauffage de conduites destinées à transporter un fluide quelconque tel que du gaz, comprenant une enveloppe amovible à laquelle est associé un moyen de refroidissement ou de réchauffage, caractérisé en ce que l'enveloppe est solidaire de l'une des extrémités d'un tube susceptible de recevoir un produit tel que par exemple un produit chauffant, ce tube étant introduit dans l'extrémité de la conduite qui est recouverte par ladite enveloppe.

On précisera encore ici que l'enveloppe précitée réalisée en un matériau thermiquement isolant, peut être ouverte et fermée sur toute sa longueur au moyen d'un système approprié, tandis que le tube précité comporte des orifices et est muni à ses extrémités de moyens de guidage.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique et en coupe axiale de la zone de raccordement de deux conduites, munies d'un dispositif quine fait pas partie de l'invention ;

La figure 2 est une vue en plan, côté face intérieure, d'un mode de réalisation de dispositif ou enveloppe qui ne fait pas partie de l'invention ;

La figure 3 est encore une vue en plan, côté face intérieure ou d'application sur la ou les conduites, d'une variante d'enveloppe ne faisant pas partie de l'invention et similaire à celle de la figure 2, mais réalisée en une matière différente et comportant des moyens de fixation ou de montage différents ;

La figure 4 est une vue en plan et schématique, côté face intérieure, d'une enveloppe selon un mode de réalisation conforme à l'invention ;

La figure 5 est une vue en coupe de l'enveloppe de la figure 4 entourant le manchon électrosoudable réalisant le raccordement de deux conduites, l'enveloppe n'étant illustrée que partiellement ;

La figure 6 est encore une vue en plan, côté face intérieure, d'un autre mode de réalisation d'enveloppe selon cette invention ;

La figure 7 est une vue en coupe axiale d'un autre mode de réalisation d'enveloppe selon l'invention montée à l'extrémité libre d'une conduite que l'on désire réchauffer, et associée à un système de préchauffage insérable dans cette conduite ; et

La figure 8 est une vue en plan schématique de l'enveloppe visible sur la figure 7, suivant la flèche VIII sur cette figure.

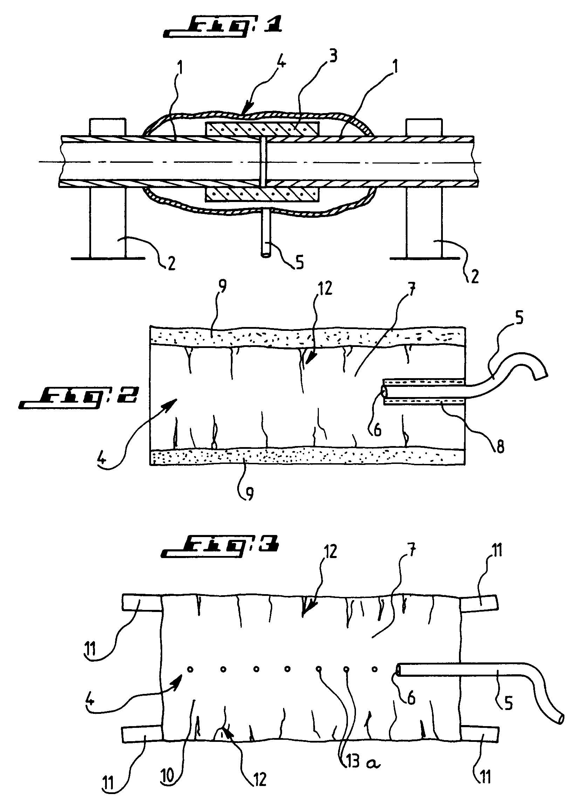

En se reportant à la figure 1, on voit les extrémités de deux conduites 1 supportées chacune par des moyens appropriés montrés schématiquement en 2, et raccordables par un manchon électrosoudable 3.

Pour réduire le temps de refroidissement de la zone de raccordement, et ainsi éviter une immobilisation trop longue du matériel, on utilise une enveloppe 4, entourant la zone de raccordement et dans laquelle est injecté par un tube 5 un agent de refroidissement de cette zone, étant entendu que le réchauffage de ladite zone, avant le raccordement, pourrait être également réalisé de la même manière en injectant un agent de réchauffage dans l'enveloppe.

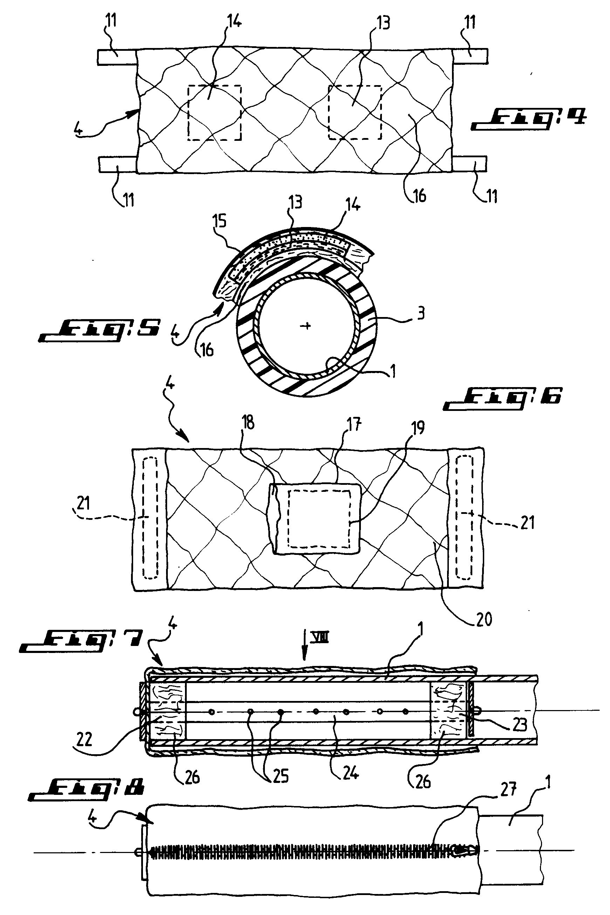

Suivant l'exemple de réalisation visible sur la figure 2, l'enveloppe 4 se présente, à l'état déployé, sous la forme d'une bande en toile par exemple, et le tube 5 d'alimentation en fluide de refroidissement, tel que de l'air, est fixé sur l'enveloppe 4 de façon à déboucher tangentiellement, comme on le voit en 6, à l'une des faces ou face intérieure 7 de l'enveloppe. Le tube 5 peut être fixé de toute manière appropriée, par couture par exemple, comme on le voit schématiquement en 8, sur la face intérieure 7 de l'enveloppe 4.

L'enveloppe ou bande 4 présente, suivant la réalisation représentée, une forme sensiblement rectangulaire, et le tube 5 est fixé orthogonalement à l'un des petits côtés de la bande 4 de façon qu'après montage autour des conduites 1, le flux de fluide refroidissant délivré par l'extrémité débouchante 6 soit injecté tangentiellement aux conduites 1 et perpendiculairement à leur axe, comme on peut le comprendre en se reportant à la figure 1.

On a montré sur la figure 2 des bandes d'auto-accrochage 9, par exemple connues sous la dénomination commerciale "Velcro", prévues sur les deux grands côtés opposés de la bande ou enveloppe 4 et sur ses deux faces, de sorte qu'après enroulement de la bande autour des conduites 1, cette bande sera fermement maintenue dans sa position enroulée.

Après refroidissement de la zone de raccordement des conduites, ou encore après réchauffage la bande, ou enveloppe 4 pourra être déroulée et réutilisée.

Ce n'est pas le cas de la réalisation d'enveloppe visible sur la figure 3, puisqu'ici l'enveloppe 4 est tout simplement réalisée à partir d'un film en matière plastique biodégradable 10 et qui peut être enfoui au moment du remblaiement de la tranchée après raccordement des conduites.

Comme dans le cas de la figure 2, sur le film en matière plastique 10 est fixé un tube 5 raccordable à une source d'air comprimé par exemple (non représentée).

Toutefois, le maintien de la bande 4 en position enroulée est assuré ici par des pattes d'accrochage et par exemple auto-collantes 11 prévues sur deux bords opposés de la bande ou enveloppe 4.

Les deux grands côtés de la bande 4 peuvent comme, dans la réalisation de la figure 2, comporter un fronçage montré schématiquement en 12 et conférant au film 10 une légère forme en creux permettant d'absorber le volume représenté par le manchon de soudage 3, sans provoquer de rupture dudit film. Ce film peut encore comporter des petits orifices 13a pour laisser échapper l'air comprimé sortant par l'extrémité débouchante 6 du tube 5, ce afin de ne pas détériorer le film lorsqu'il est à l'état enroulé. Cela n'était pas nécessaire dans la réalisation de la figure 2, puisque, par nature, la toile constituant l'enveloppe 4 est perméable à l'air.

On comprend donc de la description qui précède qu'en insufflant de l'air comprimé par le tube 5, cet air, guidé par l'enroulement de l'enveloppe 4 autour de la zone de raccordement des conduites 1, effectuera un trajet circonférentiel autour de cette zone de raccordement, ce qui permettra un refroidissement efficace de ladite zone, étant entendu, encore une fois, qu'on pourrait réaliser un réchauffage de ladite zone de la même manière, mais en alimentant le tube 5 à l'aide d'un fluide chauffant.

Suivant la réalisation visible sur la figure 4, l'enveloppe 4 forme encore ici une bande, mais cette bande ne comporte plus de tube d'amenée de fluide de refroidissement ou de réchauffage, mais porte deux poches 13, 14 contenant respectivement de l'eau et un produit, tel que par exemple le chlorure de potassium, qui, mélangé à l'eau, produit une réaction chimique. En fonction de la nature du produit dans la poche 14, la réaction chimique peut être endothermique ou exothermique.

Comme on le voit mieux sur la figure 5, les poches 13 et 14 sont agencées entre une enveloppe extérieure thermiquement isolante 15 et une enveloppe intérieure de cellulose 16 susceptible de retenir le mélange des produits dans les deux poches 13 et 14 après que ces deux poches aient été percées.

Autrement dit, après avoir enroulé l'enveloppe 4 autour de la zone de raccordement des conduites 1 avec manchon électrosoudable 3, on effectue le percement des deux poches 13 et 14 et une réaction endothermique par exemple se produit, ce qui raccourcira le temps de refroidissement de la zone de raccordement. Bien entendu, dans ce mode de réalisation des figures 4 et 5, l'enveloppe 4 n'est pas réutilisable et peut être constituée en majeure partie de matériaux biodégradables.

Revenant à la figure 4, deux bords opposés de l'enveloppe ou bande 4 portant les poches 13 et 14 peuvent comporter des pattes d'accrochage et par exemple auto-collantes 11, pour assurer le montage en position enroulée de l'enveloppe 4 autour de la zone de raccordement des conduites 1. Bien entendu, on pourrait parfaitement, sans sortir du cadre de l'invention, utiliser des bandes d'auto-accrochage comme décrit à propos de la figure 2, sans pour cela sortir du cadre de l'invention.

Dans la variante visible sur la figure 6, on voit que l'enveloppe 4 porte sur sa face intérieure une poche 17 qui, contrairement à la réalisation de la figure 4, est ouverte, comme on le voit en 18. Cette poche 17 peut recevoir, de façon amovible, un produit refroidissant ou de réchauffage lui-même de préférence conditionné et contenu dans une autre poche montrée schématiquement en 19 sur la figure 6. Après avoir monté l'enveloppe 4 sur la zone de raccordement des conduites 1, il suffira, après avoir inséré la poche de produit 19 dans la poche 18, de verser de l'eau, ce qui déclenchera une réaction exothermique par exemple.

La poche ouverte 17 est fixée, par exemple cousue, sur une bande 20 formant enveloppe, qui est en un matériau thermiquement isolant.

Deux bords opposés de la bande 20 pourront renfermer des poids 21 revêtant la forme de barres métalliques, de sorte que l'enveloppe 4 pourra facilement et commodément être mise à cheval et donc montée sur la zone de raccordement des conduites 1.

L'enveloppe 4 selon la figure 6 est évidemment réutilisable, en ce sens que la poche 19 est ouverte et permettra facilement le retrait et l'insertion de matériaux générateurs de calories ou de frigories pendant un certain temps, et comme cela est connu en soi.

On pourrait parfaitement, sans sortir du cadre de l'invention, prévoir pour la réalisation de la figure 6, des bandes d'auto-accrochage ou des pattes auto-collantes, à la place des barres métalliques 21.

On se reportera maintenant aux figures 7 et 8 pour décrire encore un autre mode de réalisation de dispositif conforme aux principes selon cette invention.

Ce dispositif comporte une enveloppe 4 qui ici est montée sur l'extrémité libre d'une conduite 1 que l'on veut préchauffer avant d'effectuer son raccordement à une autre conduite.

Cette enveloppe 4, réalisée en un matériau thermiquement isolant, est solidaire, comme on le voit bien sur la figure 7, de l'une 22 des deux extrémités 22, 23 d'un tube 24 susceptible de recevoir un produit chauffant et d'être introduit dans l'extrémité de la conduite 1.

Le tube 24 comporte des orifices 25 permettant l'évacuation des calories engendrées par le produit à l'intérieur de ce tube dont les extrémités 22 et 23 comportent chacune un cylindre en mousse par exemple 26 permettant le guidage à l'intérieur de la conduite 1 et servant également à limiter la zone de chauffe.

Ainsi, comme on le comprend, le tube ou fourreau 24 avec le produit qu'il contient, est introduit à l'intérieur de la conduite 1, et ensuite on recouvre cette conduite avec l'enveloppe 4 pour éviter les déperditions calorifiques vers l'extérieur.

Comme on le voit bien sur la figure 8, l'enveloppe 4 comporte, sur toute sa longueur, un moyen, tel que celui connu par exemple sous la dénomination "fermeture-éclair", repéré en 27, de sorte que l'enveloppe 4 peut être facilement ouverte et fermée pour permettre le retrait de l'ensemble de la conduite 1 et le montage définitif après insertion de l'ensemble dans ladite conduite.

On a donc réalisé suivant l'invention un dispositif en forme d'enveloppe, réutilisable ou non, permettant d'une façon fiable et commode de réaliser le refroidissement ou le réchauffage de la zone de raccordement de conduites ou des conduites elles-mêmes, ce dispositif demeurant d'un coût très faible et permettant de réaliser des économies considérables au niveau du temps d'immobilisation des matériels nécessaires pour réaliser le raccordement des conduites, et également au niveau du temps du processus de raccordement par électrosoudage.

Bien entendu, l'invention n'est nullement limitée aux modes de réalisation décrits et illustrés qui n'ont été donnés qu'à titre d'exemple.

## Revendications

1. Dispositif de refroidissement ou de réchauffage de conduites (1) destinées à transporter un fluide quelconque tel que du gaz, comprenant une enveloppe amovible (4) à laquelle est associé un moyen de refroidissement ou de réchauffage, caractérisé en ce que l'enveloppe (4), susceptible d'entourer une zone de raccordement avec manchon (3) des conduites (1), comporte deux poches (13, 14) contenant respectivement de l'eau et un produit qui, mélangé avec l'eau, produit une réaction exothermique ou endothermique, ces deux poches étant agencées entre une enveloppe extérieure (15) thermiquement isolante et une enveloppe intérieure de cellulose (16) retenant le mélange des produits dans les deux poches (13, 14) après perçage de celles-ci.

2. Dispositif de refroidissement ou de réchauffage de conduites (1) destinées à transporter un fluide quelconque tel que du gaz, comprenant une enveloppe amovible (4) à laquelle est associé un moyen de refroidissement ou de réchauffage, caractérisé en ce que l'enveloppe (4), susceptible d'entourer une zone de raccordement avec manchon (3) des conduites (1), est réalisée en un matériau thermiquement isolant et comporte sur l'une de ses faces au moins une poche ouverte (17) pouvant recevoir, de façon amovible un produit refroidissant ou de réchauffage conditionné et contenu dans une autre poche (19).

3. Dispositif selon la revendication 1 ou 2, caractérisé en ce que l'enveloppe précitée (4) est munie sur ses deux côtés opposés et sur ses deux faces, de bandes d'auto-accrochage (9), ou bien des pattes d'accrochage (11) sont prévues sur deux bords opposés de l'enveloppe, ou encore des masses (21) sont prévues sur ces deux bords opposés.

4. Dispositif de refroidissement ou de réchauffage de conduites (1) destinées à transporter un fluide quelconque tel que du gaz, comprenant une enveloppe amovible (4) à laquelle est associé un moyen de refroidissement ou de réchauffage, caractérisé en ce que l'enveloppe (4) est solidaire de l'une (22) des extrémités (22, 23) d'un tube (24) susceptible de recevoir un produit tel que par exemple un produit chauffant, ce tube étant introduit dans l'extrémité de la conduite (1) qui est recouverte par ladite enveloppe.

5. Dispositif selon la revendication 4, caractérisé en ce que l'enveloppe précitée réalisée en un matériau thermiquement isolant, peut être ouverte et fermée sur toute sa longueur au moyen d'un système approprié (27), tandis que le tube précité (24) comporte des orifices (25) et est muni à ses extrémités (22, 23) de moyens de guidage (26).

**Patentansprüche**

1. Vorrichtung zur Kühlung oder Erwärmung von zur Beförderung irgendeines fliessfähigen Mittels, wie eines Gases bestimmten Leitungen (1), mit einer abnehmbaren Umhüllung (4) welcher ein Kühl-bzw. Erwärmungsmittel zugeordnet ist, dadurch gekennzeichnet, dass die, zur Umschliessung eines Verbindungsbereiches mit Muffe (3) der Leitungen (1) geeignete Umhüllung (4) zwei Taschen (13,14) aufweist, welche jeweils Wasser und ein Produkt enthält, das, mit Wasser vermischt, eine exotherme oder endotherme Reaktion erzeugt, wobei diese beiden Taschen zwischen einer äusseren wärmeisolierenden Umhüllung (15) und einer inneren, das Gemisch der Produkte in den beiden Taschen (13,14) nach Durchstechen derselben zurückhaltenden inneren Umhüllung (16) aus Zellulose angeordnet sind.

2. Vorrichtung zur Kühlung oder Erwärmung von zur Beförderung irgendeines fliessfähigen Mittels, wie eines Gases bestimmten Leitungen (1), mit einer abnehmbaren Umhüllung (4), der ein Kühl-bzw. Erwärmungsmittel zugeordnet ist, dadurch gekennzeichnet, dass die, zur Umschliessung eines Verbindungsbereiches mit Muffe (3) der Leitungen (1) fähige Umhüllung (4) aus einem wärmeisolierenden Werkstoff hergestellt ist und auf einer ihrer Seiten wenigstens eine offene Tasche (17) aufweist, welche ein in einer anderen Taschen (19) verpacktes und enthaltenes Kühl-bzw. Erwärmungsprodukt abnehmbar aufnehmen kann.

3. Vorrichtung nach Anspruch 1 oder 2, dadurch gekennzeichnet, dass die vorgenannte Umhüllung (4) auf ihren entgegengesetzten Seiten und auf ihren beiden Flächen mit selbtshaftenden Streifen (9) versehen ist, oder das Anhängsel (11) an beiden entgegensetzten Rändern der Umhüllung vorgesehen sind oder noch Massen (21) an beiden entgegensetzten Rändern vorgesehen sind.

4. Vorrichtung zur Kühlung oder Erwärmung von zur Beförderung irgendeines fliessfähigen Mittels, wie eines Gases bestimmten Leitungen (1), mit einer abnehmbaren Umhüllung (4), der ein Kühl-bzw. Erwärmungsmittel zugeordnet ist, dadurch gekennzeichnet, dass die Umhüllung (4) mit einem (22) der Enden (22, 23) eines zur Aufnahme eines Produktes, wie z.B. eines Erwärmungsproduktes fähigen Rohres (24) fest verbunden ist, wobei dieses Rohr in dasjenige Ende der Leitung (1), welches durch die besagte Umhüllung überdeckt ist, eingeführt ist.

5. Vorrichtung nach Anspruch 4, dadurch gekennzeichnet, dass die aus einem wärmeisolierenden Werkstoff hergestellte vorgenannte Umhüllung über ihre gesamte Länge mittels eines geeigneten Systems (27) geöffnet und geschlossen werden kann, während das vorgenannte Rohr (24) Oeffnurgen (25) aufweist und an seinen Enden (22,23) mit Führungsmitteln (26) versehen ist.

**Claims**

1. Device for cooling or heating pipe-lines (1) adapted to carry any fluid whatsoever such as gas, comprising a removable envelope (4) with which is associated a cooling or heating means, characterized in that the envelope (4) susceptible of surrounding a junction zone with a sleeve (3) for the pipes (1) comprises two pockets (13,14) respectively containing water and a product which mixed with water produces an exothermic or endothermic reaction, these two pockets being arranged between an outer thermally insulating envelope (15) and an inner cellulose envelope (16) retaining the mixture of the products within both pockets (13,14) after puncturing of the latter.

2. Device for cooling or heating pipe-lines (1) adapted to carry any fluid whatsoever such as gas, comprising a removable envelope (4) with which is associated a cooling or heating means, characterized in that the envelope (4) susceptible of surrounding a connecting zone with a sleeve (3) for the pipes (1) is made from a thermally insulating material and comprises on one of its faces at least one open pocket (17) which may removably receive a cooling or heating product conditioned and contained in another pocket (19).

3. Device according to claim 1 or 2, characterized in that the aforesaid envelope (4) is provided on its two opposite sides and on its two faces with self-clinging strips (9) or catching lugs (11) are provided on both opposite edges of the envelope or also masses (21) are provided on these two opposite edges.

4. Device for cooling or heating pipe-lines (1) adapted to carry any fluid whatsoever such as gas, comprising a removable envelope (4) with which is associated a cooling or heating means, characterized in that the envelope (4) is made fast to one (22) of the ends (22,23) of a tube (24) susceptible of receiving a product such for example as a heating product, this tube being inserted into that end of the pipe (1) which is covered by the said envelope.

5. Device according to claim 4, characterized in that the aforesaid envelope made from a thermally insulating material may be opened and closed throughout its length by means of a suitable system (27) whereas the aforesaid tube (24) comprises orifices (25) and is provided at its ends (22,23) with guiding means (26).

Fig. 1

Fig. 2

Fig. 3

_Fig. 4_

_Fig. 5_

_Fig. 6_

_Fig. 7_

_Fig. 8_